# EUROPÄISCHE PATENTSCHRIFT

(11) **EP 3 172 457 B1**
(45) Veröffentlichungstag und Bekanntmachung des Hinweises auf die Patenterteilung: **06.03.2019**
(21) Anmeldenummer: 15738377.9
(22) Anmeldetag: 17.07.2015
(51) Int. Cl.: F16D 65/08, F16D 69/00

(54) **TROMMELBREMSE**
DRUM BRAKE
FREIN À TAMBOUR

(30) Priorität: 24.07.2014 DE 102014214517
(43) Veröffentlichungstag der Anmeldung: 31.05.2017
(73) Patentinhaber: SAF-HOLLAND GmbH, 63856 Bessenbach-Keilberg (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/066410
(87) Internationale Veröffentlichungsnummer: WO 2016/012366

(56) Entgegenhaltungen:
- GB-A- 2 087 995
- US-A- 3 007 549
- US-A- 3 013 637
- US-A- 3 029 901
- US-A- 4 700 816
- US-A- 4 732 240

## Beschreibung

Die vorliegende Erfindung betrifft eine Trommelbremse, insbesondere eine Trommelbremse zum Einsatz in Nutzfahrzeugen.

Trommelbremsen für den Einsatz in Nutzfahrzeug sind aus dem Stand der Technik hinlänglich bekannt. Dabei werden üblicherweise zwei im Inneren einer Bremstrommel angeordnete Bremsbacken durch eine entsprechende Betätigungsvorrichtung voneinander beabstandet und gegen die Innenseite der Bremstrommel gepresst. Durch die Rotationsbewegung der Bremstrommel relativ zu den Bremsbacken ergibt sich eine unterschiedliche Belastung der mit der Bremstrommel in Eingriff gelangenden Bremsbacken. Dabei findet an einer der Bremsbacken eine sogenannte Selbstverstärkung statt, während die andere Bremsbacke mit geringer Anpresskraft an die Innenseite der Trommelbremse gepresst wird. Aus diesem unterschiedlichen Belastungsprofil ergibt sich auch ein unterschiedlicher Verschleißwert der jeweiligen Bremsbeläge der Bremsbacken. In der Vergangenheit hat man versucht, diesem Problem beispielsweise durch von vorneherein unterschiedliche Ausgestaltungen der Bremsbacken und insbesondere der Herstellung eines ersten Bremsbackentyps, welcher als selbstverstärkende Bremsbacke ausgelegt ist und eines zweiten Bremsbackentyps, welcher als sogenannte ablaufende Bremsbacke eingesetzt wird. Aus diesen unterschiedlichen Konfigurationen der beiden Bremsbackentypen resultieren jedoch höhere Herstellungskosten. Weiterhin ist es bei den aus dem Stand der Technik bekannten Lösungen nicht möglich, die jeweiligen Bremsbacken auch nachträglich an bestimmte Belastungsprofile oder bestimmte Bremstrommelkonfigurationen anzupassen.
Die GB 2 087 995 A betrifft eine Trommelbremse mit einer auflaufenden Bremsbacke und einer ablaufenden Bremsbacke, wobei die auflaufende Bremsbacke zwei Belagelemente und die ablaufende Bremsbacke ein Belagelement aufweist.
Die US-3,007,549, US-4,700,816 und US-3,013,637 betreffen Trommelbremsen mit jeweiligen Bremsbacken, bei welchen die Bremsbacken eine verschiedene Anzahl von Bremsbelagelementen aufweisen.
Die US-3,029,901 und die US-4,732,240 betreffen Trommelbremsen mit Bremsbacken, bei welchen die auf dem Bremsbacken vorgesehenen Belagelemente eine unterschiedlich große Reibfläche aufweisen.

Angesichts dieser Probleme im Stand der Technik ist die Aufgabe der vorliegenden Erfindung eine Trommelbremse bereitzustellen, bei welcher eine gleichmäßige Abnutzung der Bremsbeläge der Trommelbremse erreicht werden kann und eine hohe Flexibilität und daraus resultierend auch eine nachträgliche Anpassung der Bremsbacken an die jeweiligen Betriebsbedingungen erlaubt. Weiterhin soll die vorliegende Erfindung die Herstellungskosten für eine Trommelbremse reduzieren.

Diese Aufgaben werden gelöst mit einer Trommelbremse gemäß Anspruch 1. Weitere Vorteile und Merkmale der vorliegenden Erfindung ergeben sich aus den abhängigen Ansprüchen.

Erfindungsgemäß umfasst die Trommelbremse eine erste Bremsbacke und eine zweite Bremsbacke, wobei die erste Bremsbacke als auflaufende Bremsbacke in der Trommelbremse angeordnet ist, wobei die zweite Bremsbacke als ablaufende Bremsbacke in der Trommelbremse angeordnet ist, wobei an der ersten Bremsbacke zumindest ein auflaufendes Belagelement festlegbar, vorzugsweise festgelegt, ist und an der zweiten Bremsbacke zumindest ein ablaufendes Belagelement festlegbar, vorzugsweise festgelegt, ist, wobei an der ersten Bremsbacke eine größere Anzahl an auflaufenden Belagelementen vorgesehen ist als an ablaufenden Belagelementen an der zweiten Bremsbacke. Die erste Bremsbacke und die zweite Bremsbacke sind vorzugsweise in der bekannten Art als bogenförmige Elemente ausgebildet, welche an einem ersten Ende schwenkbar im Inneren einer Bremstrommel lagerbar bzw. gelagert sind und an ihrem den ersten Ende gegenüberliegenden zweiten Ende von einer Betätigungseinheit mit einer Kraft beaufschlagt werden, welche die jeweiligen Bremsbacken gegen die Innenfläche der Bremstrommel presst. Als Betätigungseinheit findet im vorliegenden Fall vorzugsweise eine Spreizkeileinheit Verwendung. Alternativ bevorzugt kann auch ein S-Nocken zur Beabstandung der beiden Bremsbacken voneinander und zur Beaufschlagung der Bremsbacken mit einer Kraft eingesetzt werden. Die erste Bremsbacke ist als auflaufende Bremsbacke in der Trommelbremse angeordnet, wobei dies bedeutet, dass die Bremstrommel bei einem Bremsvorgang eine entlang des Umfangs der gekrümmten Außenseite der Bremsbacke bzw. dem an der Bremsbacke festgelegten auflaufenden Belagelement wirkende Kraft auf die Bremsbacke überträgt, wobei die Richtung der Kraft von der Betätigungseinheit weg führend und zum Lagerbereich für die schwenkbare Lagerung der Bremsbacke hinführend verläuft. Mit anderen Worten überträgt die Bremstrommel eine Kraft an die Bremsbacke, welche in Richtung der Betätigungskraft, welche die Betätigungseinheit auf die Bremsbacke überträgt, wirkt. An der ersten Bremsbacke findet somit eine sogenannte Selbstverstärkung statt. Die zweite Bremsbacke ist im Rahmen der Erfindung als ablaufende Bremsbacke in der Trommelbremse angeordnet, wobei die während des Bremsvorganges von der Bremstrommel auf die zweite Bremsbacke übertragene Kraft entgegen der Betätigungskraft der Betätigungseinheit wirkt. Für den Fall, dass die erste Bremsbacke und die zweite Bremsbacke von der Betätigungseinheit mit einer gleich großen Kraft beaufschlagt werden, bedeutet dies, dass während des Bremsvorganges die erste Bremsbacke wesentlich stärker an die Innenseite der Bremstrommel gepresst wird als die zweite Bremsbacke. Aufgrund dieser unterschiedlichen Anpresskraft der ersten Bremsbacke und der zweiten Bremsbacke ergaben sich bei herkömmlichen Bremsen unterschiedlich starke Abnutzungen bzw. Verschleißgeschwindigkeiten an der ersten und der zweiten Bremsbacke. Im Rahmen der vorliegenden Erfindung ist es nun vorgesehen, dass an der ersten Bremsbacke eine größere Anzahl auflaufender Belagelemente vorgesehen ist als an der zweiten Bremsbacke. Mit Vorteil führt diese größere Anzahl an auflaufenden Belagelementen dazu, dass die an der ersten Bremsbacke effektiv zur Verfügung stehende Reibungsfläche mit der Innenseite einer Bremstrommel größer ist als die an der zweiten Bremsbacke zur Verfügung stehende Reibungsfläche. Es verteilt sich somit die höhere Anpresskraft der ersten Bremsbacke an die Innenseite der Trommelbremse auf eine größere Fläche, als dies an der zweiten Bremsbacke der Fall ist. Mit Vorteil kann auf diese Weise sowohl an der ersten Bremsbacke als auch an der zweiten Bremsbacke eine im Wesentlichen gleiche Flächenpressung zwischen den jeweiligen an der ersten oder der zweiten Bremsbacke angeordneten Belagelementen und der Innenseite einer Bremstrommel erreicht werden. Diese bevorzugt im Wesentlichen gleiche Flächenpressung sowohl an der ersten Bremsbacke als auch an der zweiten Bremsbacke führt zu einem im Wesentlichen gleichmäßigen Verschleiß aller an den jeweiligen Bremsbacken angeordneten Belagelemente. Es ist auf diese Weise möglich, den Wartungszyklus für eine Trommelbremse zu verlängern, da die Bremsbeläge sowohl an den auflaufenden Belagelementen als auch an den ablaufenden Belagelementen im Wesentlichen zum gleichen Zeitpunkt ihre Verschleißgrenze erreichen und somit nicht ein Bremsbelag bereits verschlissen ist, während der an der gegenüberliegenden Bremsbacke angeordnet Bremsbelag noch eine ausreichende Stärke aufweist. Weiterhin kann auf diese Weise auch der Materialeinsatz bei den Bremsbelägen reduziert werden, was sowohl zu einer Reduzierung des Gewichts der Trommelbremse führt als auch ökonomisch und ökologisch vorteilhaft ist. Als Belagelement wird im vorliegenden Fall vorzugsweise ein Bremsbelagträger definiert, welcher über Eingriffsmittel zum formschlüssigen und/oder kraftschlüssigen Eingriff an entsprechend korrespondierenden Eingriffsmitteln an der ersten oder der zweiten Bremsbacke verfügt und an seiner der Bremsbacke gegenüberliegenden Außenseite einen Bremsbelag bzw. Reibbelag aufweist. Besonders bevorzugt ist die Verbindung zwischen einem Belagelement und einer Bremsbacke lösbar, wodurch ein einfacher Wechsel der Belagelemente nach deren vollständigem Verschleiß und der Ersatz alter Belagelemente durch neue im Wesentlichen identisch ausgebildete Belagelemente mit frischen Reibbelägen möglich sind.

In einer bevorzugten Ausführungsform ist zumindest ein auflaufendes Belagelement identisch zu einem ablaufenden Belagelement ausgebildet. Die identische Ausbildung der Belagelemente bezieht sich dabei mit Vorteil auf die am Belagelement zur Verfügung stehende effektive Reibfläche zur bremsenden Reibung an der Innenseite einer Trommelbremse und auf die Anordnung und Ausbildung der Befestigungsmittel am Belagelement zur Festlegung des Belagelements an einer Bremsbacke. Durch die identische Ausbildung der Belagelemente wird insbesondere bevorzugt ein Austausch bzw. ein universaler Einsatz eines bestimmten Typs von Belagelementen sowohl an der ersten Bremsbacke als auch an der zweiten Bremsbacke möglich. Auf diese Weise ist es möglich, mit ein und demselben Typ von Belagelementen eine Vielzahl von unterschiedlichen Konfigurationen an der ersten und/oder der zweiten Bremsbacke einzureichen und gleichzeitig eine vereinheitlichte Fertigung, welche mit Vorteil große Kostenersparnisse bringt, anwenden zu können. Besonders bevorzugt kann dabei ein und dieselbe Maschine bzw. ein und dasselbe Werkzeug zur Herstellung von Belagelementen sowohl für die auflaufenden Belagelemente als auch für die ablaufenden Belagelemente eingesetzt werden. Es ergeben sich durch diese Vereinfachung und Vereinheitlichung der Herstellung der Belagelemente besonders gute Möglichkeiten zur Kosteneinsparung.

Erfindungsgemäß sind alle Belagelemente, also erste und zweite Belagelemente, aus demselben Material ausgebildet. Hierdurch können Kosten bei der Herstellung reduziert werden, da nur ein Herstellungsprozess für sämtliche Belagelemente erforderlich ist. Mit Vorteil kann somit allein durch gezieltes Anordnen einer bestimmten Anzahl von Belagelementen an der Bremsbacke der gleiche Effekt erzielt werden, wie durch das Anordnen von Belagelementen verschiedenen Materials.

Insbesondere können Belagelemente mit verschieden großen Belagflächen vorgesehen sein, die in verschiedener Anzahl an der ersten oder der zweiten Bremsbacke angeordnet sind. Auf diese Weise können durch die größere Anzahl verschiedener Kombinationen die Bremscharakteristiken der beiden Bremsbacken angepasst werden. Hier schafft das Bereitstellen verschieden großer Belagelemente einen höheren Freiheitsgrad für die Anpassung der Bremsbacken an die jeweils auftretenden Belastungen in der Bremse, welcher mit gestiegenen Fertigungskosten erkauft wird. Dies kann sich lohnen, da die Abnutzung der Belagelemente somit noch genauer aufeinander abgestimmt werden kann.

Weiterhin bevorzugt ist die erste Bremsbacke identisch zu der zweiten Bremsbacke ausgebildet. Die identische Ausbildung der ersten Bremsbacke und der zweiten Bremsbacke bezieht sich dabei insbesondere auf die Außengeometrie der Bremsbacke, an welcher ein oder mehrere Belagelemente festlegbar sind. So weist die erste Bremsbacke vorzugsweise die gleichen Eingriffsmittel mit der gleichen geometrischen Anordnung auf wie die zweite Bremsbacke, so dass ein Belagelement ohne Weiteres sowohl an der ersten Bremsbacke oder an der zweiten Bremsbacke festlegbar ist. Es ist auf diese Weise möglich, die Herstellung der Bremsbacken zu vereinfachen, da mit ein und derselben Maschine bzw. mit ein und demselben Werkzeug sowohl die erste Bremsbacke als auch die zweite Bremsbacke hergestellt werden kann und keine Variation in der Konstruktion der Bremsbacken erforderlich ist.

In einer bevorzugten Ausführungsform weisen die auflaufenden und die ablaufenden Belagelemente jeweils eine Reibfläche auf, wobei die Summe der Reibflächen der auflaufenden Belagelemente eine auflaufende Reibfläche ergibt, wobei die Summe der Reibflächen der ablaufenden Belagelemente eine ablaufende Reibfläche ergibt, wobei die Größen der auflaufenden Reibfläche zur ablaufenden Reibfläche in einem Verhältnis ungleich 1, zweckmäßigerweise von 1,5 bis 4,5, vorzugsweise 2 bis 4 und besonders bevorzugt von ca. 2,75 bis 3,25 steht. Mit Vorteil ist also an der ersten Bremsbacke ein oder eine Vielzahl von auflaufenden Belagelementen angeordnet, die jeweils eine Reibfläche aufweisen. Dabei ist die Summe der Reibflächen der auflaufenden Belagelemente als auflaufende Reibfläche definiert. Analog hierzu ist die Summe der Reibflächen an den ablaufenden Belagelementen als ablaufende Reibfläche definiert. Mit dem bevorzugten Verhältnisbereich von 1,5 bis 4,5 ist es im Rahmen der vorliegenden Erfindung mit Vorteil möglich, einerseits eine gleichmäßige Abnutzung an den ablaufenden und an den auflaufenden Belagelementen zu erreichen und andererseits den Bauraumbedarf der Trommelbremse nicht zu hoch werden zu lassen. Insbesondere wird vermieden, dass bei einem Verhältnis von größer 4,5, bei einer relativ groß bauenden Trommelbremse nur eine relativ kleine Gesamtreibfläche aller Belagelemente in der Trommelbremse vorhanden wäre. Je kleiner das Verhältnis von auflaufender Reibfläche zu ablaufender Reibfläche ist, desto geringer ist der Anteil der Selbstverstärkung an der auflaufenden Reibfläche, welcher durch das entsprechende Flächenverhältnis ausgeglichen werden kann. Der bevorzugte Bereich von 2 bis 4 des Verhältnisses der auflaufenden Reibfläche zur ablaufenden Reibfläche hat sich in Versuchsreihen der Anmelderin insbesondere für Nutzfahrzeuge wie Lastkraftwagen oder Omnibusse bewährt, wobei insbesondere ein guter Kompromiss aus dem für die Trommelbremse benötigten Bauraum und gleichzeitig einer guten und gleichmäßigen Abnutzung sämtlicher Belagelemente in der Trommelbremse erreicht werden konnte. Der besonders bevorzugte Bereich von ca. 2,75 bis 3,25 des Verhältnisses der auflaufenden zur ablaufenden Reibfläche kann insbesondere für hoch belastete Bremsen, bei denen eine Vielzahl relativ klein ausgebildeter Belagelemente an der ersten oder der zweiten Bremsbacke festgelegt wird, eine besonders gleichmäßige Abnutzung aller Belagelemente in der Trommelbremse bei einem gleichzeitig optimal ausgenutzten Bauraum und einer ausreichend hohen zur Verfügung stehenden Gesamtmaximalbremskraft der Trommelbremse erreichen.

Erfindungsgemäß ist an der ersten Bremsbacke ein erstes auflaufendes Belagelement mit einer ersten Reibfläche und ein zweites auflaufendes Belagelement mit einer zweiten Reibfläche festlegbar, oder vorzugsweise festgelegt, wobei die Größen der ersten und zweiten Reibfläche verschieden sind, wobei die zweite Reibfläche zur ersten Reibfläche zweckmäßigerweise in einem Verhältnis von 0,1 bis 0,8, vorzugsweise von 0,25 bis 0,75 und besonders bevorzugt von ca. 0,45 bis 0,55 steht. Insbesondere um die Variabilität der Auslegung der ersten Bremsbacke und der zweiten Bremsbacke zu erhöhen, ist es bevorzugt, dass insbesondere an der ersten Bremsbacke Belagelemente verschiedener Größe bzw. mit verschiedener Reibfläche zum Einsatz gelangen können. Auf diese Weise können insbesondere die nicht gradzahligen Reibflächenverhältnisse von auflaufender Reibfläche zu ablaufender Reibfläche erreicht werden. Dabei hat es sich gezeigt, das insbesondere ein erster Belagelementtyp mit einer ersten Reibfläche und ein zweiter Belagelementtyp mit einer zweiten Reibfläche zum Einsatz gelangen können, wobei das Verhältnis der Reibflächen des ersten auflaufenden Belagelements und des zweiten auflaufenden Belagelements vorzugsweise im Bereich von 0,1 bis 0,8 liegen sollte. Versuche der Anmelderin haben gezeigt, dass bei Auswahl dieses Flächenverhältnisses ein guter Kompromiss aus einfacher Festlegung der Belagelemente an der Bremsbacke durch im Wesentlichen identisch ausgebildete Eingriffselemente bzw. Eingriffsabschnitte an den Belagelementen bei gleichzeitig hohem Variabilitätspotential für die Einstellung verschiedener Flächenverhältnisse zwischen der ersten Bremsbacke und der zweiten Bremsbacke zur Verfügung steht. Der besonders bevorzugte Bereich von 0,25 bis 0,75 der zweiten Reibfläche zur ersten Reibfläche hat sich dabei insbesondere für die Massenproduktion von Trommelbremsen bewährt, da es dem Konstrukteur einer Trommelbremse auf diese Weise einfach ist, durch Auswahl bestimmter Anzahlen von ablaufenden Belagelementen und auflaufenden Belagelementen ein bestimmtes Reibflächenverhältnisse der auflaufenden Reibfläche zur ablaufenden Reibfläche einzustellen und somit die Verschleißeigenschaften abhängig von der jeweiligen Trommelbremse perfekt anpassen zu können. Der insbesondere bevorzugte Bereich von 0,45 bis 0,55 erlaubt eine besonders einfache Fertigung der Belagelemente, da ein erstes auflaufendes Belagelement vorzugsweise nur ungefähr halb so groß ist wie ein zweites auflaufendes Belagelement. Gleichzeitig ist es möglich, dass auf diese Weise durch an der jeweiligen Bremsbacke vorgesehene gleichmäßig verteilte Eingriffsmittel die Befestigungspositionen für das erste auflaufende Belagelement und das zweite auflaufende Belagelement im Wesentlichen frei gewählt werden können und eine besonders gleichmäßige Verteilung der Belagelemente entlang des Umfangs der Bremsbacke möglich ist.
Vorzugsweise ist die Reibfläche des ablaufenden Belagelements gleich der ersten Reibfläche oder der zweiten Reibfläche. Mit anderen Worten kann vorzugsweise als ablaufendes Belagelement eines der auflaufenden Belagelemente mit jeweils der ersten Reibfläche oder der zweiten Reibfläche ausgewählt werden. Auf diese Weise lässt sich wiederum die Anzahl der verschiedenen herzustellenden Bauteile einer Trommelbremse reduzieren und somit die Fertigungskosten verringern.
Besonders bevorzugt sind zumindest zwei auflaufende Belagelemente identisch zueinander ausgebildet. So ist es bevorzugt vorgesehen, dass von beispielsweise drei an der ersten Bremsbacke angeordneten auflaufenden Belagelementen zumindest zwei dieser auflaufenden Belagelemente identisch ausgebildet sind. Die identische Ausbildung der Belagelemente bezieht sich dabei insbesondere bevorzugt auf die Anordnung und Geometrie der Befestigungsmittel an den Belagelementen zur Festlegung an der ersten Bremsbacke. Wiederum lässt sich die Anzahl der herzustellenden Varianten für Belagelemente durch diese bevorzugte Ausführungsform reduzieren, wodurch auch die Herstellungskosten sinken und der Montageaufwand durch die geringere Anzahl verschiedener Bauteile reduziert wird.

In einer Ausführungsform, die die Erfindung nicht betrifft, sind alle auflaufenden und ablaufenden Belagelemente identisch zueinander ausgebildet. Im besonders bevorzugten Fall, dass alle auflaufenden und ablaufenden Belagelemente identisch zueinander ausgebildet sind, wobei vorzugsweise die Reibfläche der Belagelemente gleich ist und die Belagelemente die gleiche bzw. identische Ausbildung ihrer Befestigungsmittel zur Festlegung der Belagelemente an der Bremsbacke aufweisen, wird die auflaufende Reibfläche im Verhältnis zur ablaufenden Reibfläche lediglich durch die verschiedene Anzahl von Belagelementen an der ersten Bremsbacke und an der zweiten Bremsbacke eingestellt. Der Vorteil der identischen Ausbildung aller Belagelemente sind dabei drastisch reduzierte Herstellungskosten, da für die Herstellung einer Vielzahl von verschiedenen Trommelbremsen für verschiedene Typen von Nutzfahrzeugen nur ein und derselbe Typ von Belagelementen zum Einsatz gelangen kann. Weiterhin bevorzugt kann bei dieser Ausführungsform auch die erste Bremsbacke identisch zur zweiten Bremsbacke ausgebildet sein, wodurch in Kombination mit den gleich ausgebildeten Belagelementen die Fertigung und Montage der Trommelbremse vereinfacht und somit verbilligt wird.

In einer ferner bevorzugten Ausführungsform sind an der ersten Bremsbacke drei auflaufende Belagelemente festgelegt und an der zweiten Bremsbacke ein ablaufendes Belagelement festgelegt. Tests der Anmelderin haben gezeigt, dass die Kombination von drei auflaufenden Belagelementen an der ersten Bremsbacke mit einem ablaufenden Belagelement an der zweiten Bremsbacke eine besonders günstige Verschleißgeschwindigkeit- beziehungsweise rate für alle Belagelemente erreichen können, wobei für Trommelbremsen von Nutzfahrzeugen eine fast vollständige Abnutzung der Belagelemente erreicht werden kann, wodurch insbesondere kein Bremsbelag durch zu frühen Wechsel verschwendet wird. Auf diese Weise lassen sich die Betriebskosten eines Nutzfahrzeuges, welches mit einer erfindungsgemäßen Trommelbremse ausgestattet ist, deutlich reduzieren.

Mit Vorteil weisen die Belagelemente je einen Befestigungsabschnitt zur Festlegung an der ersten Bremsbacke oder der zweiten Bremsbacke auf, wobei die Befestigungsabschnitte der Belagelemente vorzugsweise identisch ausgebildet sind. Als Befestigungsabschnitt eines Belagelements ist dabei im vorliegenden Fall vorzugsweise eine Lochanordnung, in welche beispielsweise Nietelemente eingesetzt werden können oder vorzugsweise an den Belagelementen ausgebildete Vorsprünge, welche formschlüssig in entsprechende Eingriffsgeometrien an der Bremsbacke eingreifen und form- und/oder kraftschlüssig an der Bremsbacke festlegbar sind, definiert. Durch die identische Ausbildung und Anordnung des Befestigungsabschnitts an einem Belagelement kann das Belagelement vorzugsweise in verschiedenen Einbaupositionen an der Bremsbacke, welche vorzugsweise ebenfalls identisch oder in einem wiederkehrenden Muster angeordnete Eingriffsgeometrien aufweist, angeordnet werden. Als weitere bevorzugte Ausführungsform für die Befestigungsabschnitte können beispielsweise auch Hinterschneidungsgeometrien wie beispielsweise eine schwalbenschwanzförmige Ausbildung des Befestigungsabschnitts des Belagelements, welches in einer entsprechend korrespondierende Aussparung im Außenbereich der Bremsbacke eingreift, zum Einsatz gelangen. Besonders bevorzugt sind die Befestigungsabschnitte der Belagelemente dafür ausgelegt, dass die Festlegung des Belagelements an der Bremsbacke lösbar ist, ohne dass dafür größere Teile der Bremsbacke oder des Belagelements beschädigt werden müssen.
Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist, und sofern dies nicht aufgrund technischer Gegebenheiten oder explizit vom Wortlaut der Ansprüchen ausgeschlossen wurde. Es zeigen:
- Fig. 1: eine Ansicht einer bevorzugten Ausführungsform einer erfindungsgemäßen Trommelbremse, und
- Fig. 2: eine Ansicht einer weiteren bevorzugten Ausführungsform der Bremsbacken einer erfindungsgemäßen Trommelbremse.

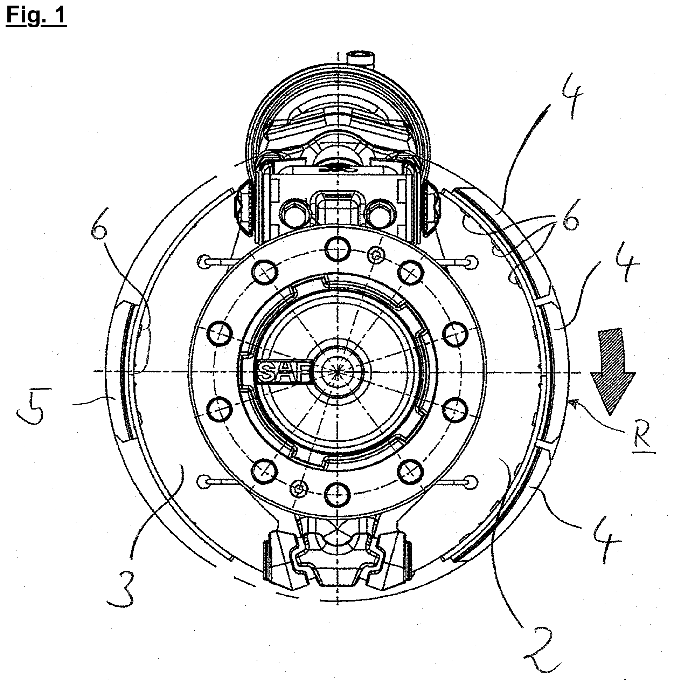

Bei der in Fig. 1 gezeigten bevorzugten Ausführungsform der Trommelbremse ist eine erste Bremsbacke 2 und eine zweite Bremsbacke 3 in einer für Trommelbremsen üblichen Weise am jeweils unteren Ende der Bremsbacke schwenkbar am Bremsträger gelagert, wobei an der in den Figuren oben gezeigten Seite der Bremsbacken 2, 3 jeweils eine Betätigungseinheit (ohne Bezugszeichen) an den Bremsbacken 2, 3 angreift, um diese mit einer Kraft zu beaufschlagen. Im vorliegenden Beispiel ist die Betätigungseinheit vorzugsweise als Spreizkeileinheit ausgebildet. Schematisch als einfache Strich-Punkt-Linie ist um die Bremsbacken herum die Bremstrommel angedeutet, wobei der auf der rechten Seite der Figur gezeigte schraffierte Pfeil die Rotationsrichtung der Bremstrommel relativ zu den Bremsbacken 2, 3 verdeutlicht. Die in der Figur rechts gezeigte erste Bremsbacke 2 ist somit als auflaufende Bremsbacke in der Trommelbremse angeordnet, während die in der Figur links gezeigte zweite Bremsbacke 3 als ablaufende Bremsbacke ausgebildet ist. An der ersten Bremsbacke 2 sind vorzugsweise drei auflaufende Belagelemente 4 angeordnet und über einen bevorzugten Befestigungsabschnitt 6 jeweils an der ersten Bremsbacke 2 festgelegt. An der zweiten Bremsbacke 3 ist vorzugsweise nur ein ablaufendes Belagelement 5 ebenfalls über einen Befestigungsabschnitt 6 festgelegt. Es versteht sich, dass im Rahmen der vorliegenden Erfindung die Kombination verschiedener Anzahlen von auflaufenden Belagelementen 4 und ablaufenden Belagelementen zur Einstellung eines bestimmten Verhältnisses der Summe der Reibflächen der ablaufenden Belagelemente 5 zur Summe der Reibflächen der auflaufenden Belagelemente 4 vorgesehen sein kann. Jedes der Belagelemente 4, 5 weist eine Reibfläche R auf, welche jeweils bei einer Bremsung des Fahrzeuges durch die Trommelbremse mit der schematisch angedeuteten Bremstrommel in Reibkontakt tritt. Durch die entsprechende Verteilung von Belagelementen als auflaufende Belagelemente 4 und ablaufende Belagelemente 5 an der ersten Bremsbacke und der zweiten Bremsbacke 3 kann somit ein bestimmtes Flächenverhältnis der zur Verfügung stehenden Gesamtreibfläche an der ersten Bremsbacke 2 im Verhältnis zur zweiten Bremsbacke 3 eingestellt werden. Mittels dieser unterschiedlichen Gesamtreibflächen kann auch bei auftretender Selbstverstärkung an der ersten Bremsbacke 2 eine gleichmäßige Flächenpressung, das heißt Kraft pro Fläche, an allen in der Trommelbremse vorgesehenen Belagelementen 4, 5 eingestellt werden, wodurch insbesondere der Verschleiß der Belagelemente 4, 5 gleichmäßig erfolgt und somit alle Belagelemente 4, 5 zur gleichen Zeit ihre Lebensdauergrenze erreichen.

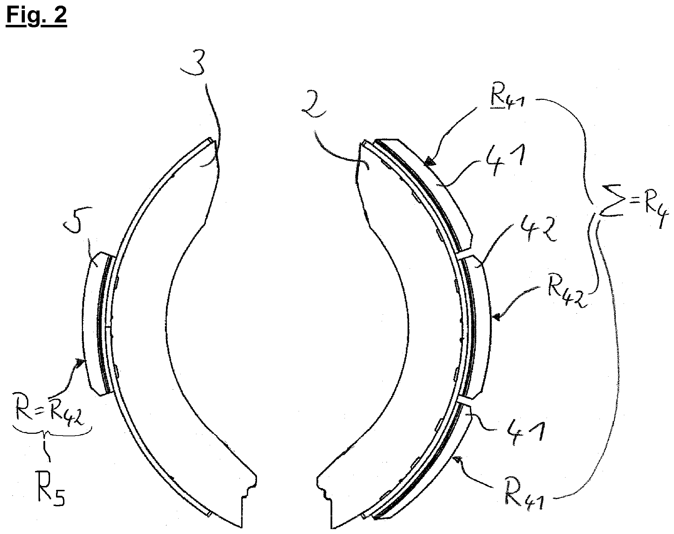

Fig. 2 zeigt eine weitere bevorzugte Ausführungsform der ersten Bremsbacke 2 und der zweiten Bremsbacke 3 zur Ausbildung einer Trommelbremse im Sinne der vorliegenden Erfindung. Dabei sind an der ersten Bremsbacke 2 wiederum drei auflaufende Belagelemente 4 vorgesehen, wobei jedoch im Unterschied zu der in Fig. 1 dargestellten Ausführungsform die auflaufenden Belagelemente 4 unterschiedliche Größen aufweisen. So ist insbesondere ein erstes auflaufendes Belagelement 41 vorgesehen, welches eine erste Reibfläche R₄₁ aufweist. Mittig an der ersten Bremsbacke 2 ist ein zweites auflaufendes Belagelement vorgesehen, welches eine zweite Reibfläche R₄₂ aufweist. Besonders bevorzugt ist das ablaufende Belagelement 5 an der zweiten Bremsbacke 3 mit derselben Reibfläche R ausgestattet wie das zweite auflaufende Belagelement 42. Besonders bevorzugt ist die zweite Reibfläche R₄₂ kleiner als die erste Reibfläche R₄₁ ausgebildet, um insbesondere durch Anordnung nicht nur eines ablaufenden Belagelements 5, sondern einer Vielzahl von ablaufenden Belagelementen 5 ein bestimmtes Flächenverhältnis der auflaufenden Reibfläche R₄ zur ablaufenden Reibfläche R₅ zu erreichen. Die Verwendung unterschiedlich ausgebildeter Belagelemente 4, 5 verursacht zwar einen etwas höheren Fertigungsaufwand als die Verwendung von einheitlichen Belagelementen 4, 5 sowohl an der ersten Bremsbacke 2 als auch an der zweiten Bremsbacke 3. Es ist aber bei der Verwendung unterschiedlich ausgebildeter Belagelemente 4, 5 möglich, eine größere Variabilität der Trommelbremse zu erreichen, in dem innerhalb kleiner Intervalle bestimmte Flächenverhältnisse der auflaufenden Reibfläche R₄ zur ablaufenden Reibfläche R₅ eingestellt werden können. Mit dieser bevorzugten Ausführungsform der Erfindung lassen sich gleichmäßige Verschleißgeschwindigkeiten an allen in der Trommelbremse angeordneten Belagelementen 4, 5 einstellen, wodurch eine bessere Anpassung der Trommelbremse an die jeweiligen Einsatzbedingungen möglich wird.

### Bezugszeichen:

- 2: - erste Bremsbacke
- 3: - zweite Bremsbacke
- 4: - auflaufendes Belagelement
- 5: - ablaufendes Belagelement
- 6: - Befestigungsabschnitt
- R: - Reibfläche
- R₄: - auflaufende Reibfläche
- R₅: - ablaufende Reibfläche
- R₄₁: - erste Reibfläche
- R₄₂: - zweite Reibfläche

## Patentansprüche

1. Trommelbremse, insbesondere Trommelbremse für Nutzfahrzeuge, umfassend eine erste Bremsbacke (2) und eine zweite Bremsbacke (3), wobei die erste Bremsbacke (2) als auflaufende Bremsbacke in der Trommelbremse angeordnet ist,
wobei die zweite Bremsbacke (3) als ablaufende Bremsbacke in der Trommelbremse angeordnet ist,
wobei an der ersten Bremsbacke (2) zumindest ein auflaufendes Belagelement (4) festlegbar ist und an der zweiten Bremsbacke (3) zumindest ein ablaufendes Belagelement (5) festlegbar ist, wobei an der ersten Bremsbacke (2) eine größere Anzahl an auflaufenden Belagelementen (4) festgelegt ist als an ablaufenden Belagelementen (5) an der zweiten Bremsbacke (3), wobei an der ersten Bremsbacke (2) ein erstes auflaufendes Belagelement (41) mit einer ersten Reibfläche (R₄₁) und ein zweites auflaufendes Belagelement (42) mit einer zweiten Reibfläche (R₄₂) festlegbar sind, deren Größen verschieden sind,
wobei die zweite Reibfläche (R₄₂) zur ersten Reibfläche (R₄₁) in einem Verhältnis von 0,1 bis 0,8 steht,
**dadurch gekennzeichnet, dass** alle Belagelemente (4, 5) aus demselben Material ausgebildet sind.

2. Trommelbremse nach Anspruch 1,
wobei zumindest ein auflaufendes Belagelement (4) identisch mit einem ablaufenden Belagelement (5) ausgebildet ist.

3. Trommelbremse nach einem der vorhergehenden Ansprüche,
wobei die auflaufenden und ablaufenden Belagelemente (4, 5) jeweils eine Reibfläche (R) aufweisen,
wobei die Summe der Reibflächen (R) der auflaufenden Belagelemente (4) eine auflaufende Reibfläche (R₄) ergibt,
wobei die Summe der Reibflächen (R) der ablaufenden Belagelemente (5) eine ablaufende Reibfläche (R₅) ergibt,
wobei die auflaufende Reibfläche (R₄) zur ablaufenden Reibfläche (R₅) in einem Verhältnis von 1,5 bis 4,5, vorzugsweise 2 bis 4 und besonders bevorzugt von ca. 2,75 bis 3,25 steht.

4. Trommelbremse nach einem der vorhergehenden Ansprüche,
wobei die erste Bremsbacke (2) identisch mit der zweiten Bremsbacke (3) ausgebildet ist.

5. Trommelbremse nach einem der vorhergehenden Ansprüche,
wobei die zweite Reibfläche (R₄₂) zur ersten Reibfläche (R₄₁) zweckmäßigerweise in einem Verhältnis von 0,25 bis 0,75 und bevorzugt von 0,45 bis 0,55 steht.

6. Trommelbremse nach Anspruch 5,
wobei die Reibfläche (R) des ablaufenden Belagelements (5) gleich der ersten Reibfläche (R₄₁) oder der zweiten Reibfläche (R₄₂) ist.

7. Trommelbremse nach einem der vorhergehenden Ansprüche,
wobei zumindest zwei auflaufende Belagelemente (4) identisch zueinander ausgebildet sind.

8. Trommelbremse nach einem der vorhergehenden Ansprüche,
wobei drei auflaufende Belagelemente (4) an der ersten Bremsbacke (2) festgelegt sind, und
wobei ein ablaufendes Belagelement (5) an der zweiten Bremsbacke (3) festgelegt ist.

9. Trommelbremse nach einem der vorhergehenden Ansprüche,
wobei die Belagelemente (4, 5) je einen Befestigungsabschnitt (6) zur Festlegung an der ersten Bremsbacke (2) oder zweiten Bremsbacke (3) aufweisen,
wobei die Befestigungsabschnitte (6) der Belagelemente (4, 5) vorzugsweise identisch ausgebildet sind.

## Claims

1. A drum brake, in particular a drum brake for commercial vehicles, comprising a first brake shoe (2) and a second brake shoe (3), wherein the first brake shoe (2) is arranged as a leading brake shoe in the drum brake,
wherein the second brake shoe (3) is arranged as a trailing brake shoe in the drum brake,
wherein at least one leading lining element (4) can be fixed on the first brake shoe (2), and at least one trailing lining element (5) can be fixed on the second brake shoe (3), wherein the number of leading lining elements (4) fixed on the first brake shoe (2) is greater than the number of trailing lining elements (5) fixed on the second brake shoe (3),
wherein a first leading lining element (41) having a first friction area (R₄₁) and a second leading lining element (42) having a second friction area (R₄₂), the sizes of which are different, can be fixed on the first brake shoe (2), wherein the ratio of the second friction area (R₄₂) to the first friction area (R₄₁) is from 0.1 to 0.8,
**characterized in that** all the lining elements (4, 5) are formed from the same material.

2. The drum brake as claimed in claim 1,
wherein at least one leading lining element (4) is of identical design to a trailing lining element (5).

3. The drum brake as claimed in one of the preceding claims,
wherein the leading and trailing lining elements (4, 5) each have a friction area (R),
wherein the sum of the friction areas (R) of the leading lining elements (4) gives a leading friction area (R₄),
wherein the sum of the friction areas (R) of the trailing lining elements (5) gives a trailing friction area (R₅),
wherein the ratio of the leading friction area (R₄) to the trailing friction area (R₅) is from 1.5 to 4.5, preferably 2 to 4 and particularly preferably from about 2.75 to 3.25.

4. The drum brake as claimed in one of the preceding claims,
wherein the first brake shoe (2) is of identical design to the second brake shoe (3).

5. The drum brake as claimed in one of the preceding claims,
wherein the ratio of the second friction area (R₄₂) to the first friction area (R₄₁) is expediently from 0.25 to 0.75 and preferably from 0.45 to 0.55.

6. The drum brake as claimed in claim 5,
wherein the friction area (R) of the trailing lining element (5) is equal to the first friction area (R₄₁) or to the second friction area (R₄₂).

7. The drum brake as claimed in one of the preceding claims,
wherein at least two leading lining elements (4) are of identical design to one another.

8. The drum brake as claimed in one of the preceding claims,
wherein three leading lining elements (4) are fixed on the first brake shoe (2), and
wherein one trailing lining element (5) is fixed on the second brake shoe (3).

9. The drum brake as claimed in one of the preceding claims,
wherein the lining elements (4, 5) each have a fastening section (6) for fixing on the first brake shoe (2) or the second brake shoe (3),
wherein the fastening sections (6) of the lining elements (4, 5) are preferably of identical design.

## Revendications

1. Frein à tambour, en particulier frein à tambour pour véhicules utilitaires, comportant une première mâchoire de frein (2) et une seconde mâchoire de frein (3),
dans lequel
la première mâchoire de frein (2) est agencée sous la forme d'une mâchoire de frein comprimée dans le frein à tambour,
la seconde mâchoire de frein (3) est agencée sous la forme d'une mâchoire de frein tendue dans le frein à tambour,
au moins un élément de garniture comprimé (4) est susceptible d'être immobilisé sur la première mâchoire de frein (2) et au moins un élément de garniture tendu (5) est susceptible d'être immobilisé sur la seconde mâchoire de frein (3),
un nombre d'éléments de garniture comprimés (4) immobilisé sur la première mâchoire de frein (2) est supérieur à celui d'éléments de garniture tendus (5) sur la seconde mâchoire de frein (3),
un premier élément de garniture comprimé (41) muni d'une première surface de friction (R₄₁) et un second élément de garniture comprimé (42) muni d'une seconde surface de friction (R₄₂) sont susceptibles d'être immobilisés sur la première mâchoire de frein (2), dont les tailles sont différentes,
la seconde surface de friction (R₄₂) est dans un rapport de 0,1 à 0,8 vis-à-vis de la première surface de friction (R₄₁),
**caractérisé en ce que**
tous les éléments de garniture (4, 5) sont constitués du même matériau.

2. Frein à tambour selon la revendication 1,
dans lequel
au moins un élément de garniture comprimé (4) est réalisé de façon identique à un élément de garniture tendu (5).

3. Frein à tambour selon l'une des revendications précédentes,
dans lequel
les éléments de garniture comprimé et tendu (4, 5) présentent chacun une surface de friction (R),
la somme des surfaces de friction (R) des éléments de garniture comprimés (4) donne une surface de friction comprimée (R₄),
la somme des surfaces de friction (R) des éléments de garniture tendus (5) donne une surface de friction tendue (R₅),
la surface de friction comprimée (R₄) est dans un rapport de 1,5 à 4,5, de préférence de 2 à 4 et de manière particulièrement préférée d'environ 2,75 à 3,25 vis-à-vis de la surface de friction tendue (R₅).

4. Frein à tambour selon l'une des revendications précédentes,
dans lequel
la première mâchoire de frein (2) est réalisée de façon identique à la seconde mâchoire de frein (3).

5. Frein à tambour selon l'une des revendications précédentes,
dans lequel
la seconde surface de friction (R₄₂) est judicieusement dans un rapport de 0,25 à 0,75 et de préférence de 0,45 à 0,55 vis-à-vis de la première surface de friction (R₄₁).

6. Frein à tambour selon la revendication 5,
dans lequel
la surface de friction (R) de l'élément de garniture tendu (5) est égale à la première surface de friction (R₄₁) ou à la seconde surface de friction (R₄₂).

7. Frein à tambour selon l'une des revendications précédentes,
dans lequel
au moins deux éléments de garniture comprimés (4) sont réalisés de façon identique l'un à l'autre.

8. Frein à tambour selon l'une des revendications précédentes,
dans lequel
trois éléments de garniture comprimés (4) sont immobilisés sur la première mâchoire de frein (2), et
un élément de garniture tendu (5) est immobilisé sur la seconde mâchoire de frein (3).

9. Frein à tambour selon l'une des revendications précédentes,
dans lequel
les éléments de garniture (4, 5) comprennent chacun une portion de fixation (6) pour l'immobilisation sur la première mâchoire de frein (2) ou sur la seconde mâchoire de frein (3), et
les portions de fixation (6) des éléments de garniture (4, 5) sont réalisées de préférence de façon identique.
